Europäisches Patentamt

European Patent Office

Office européen des brevets

(11) Numéro de publication: **0 260 365**

**A1**

## DEMANDE DE BREVET EUROPEEN

(21) Numéro de dépôt: 86401840.3

(51) Int. Cl.⁴: **H01C 10/10**

(22) Date de dépôt: **19.08.86**

(43) Date de publication de la demande:
**23.03.88 Bulletin 88/12**

(84) Etats contractants désignés:
**AT BE CH DE GB IT LI LU NL SE**

(71) Demandeur: **M.C.B.**
**11, rue Pierre Lhomme**
**F-92400 Courbevoie(FR)**

(72) Inventeur: **Taillebois, Jacques**
**Résidence Brigitte 23, rue des Ebisoires**
**F-78370 Plaisir(FR)**
Inventeur: **Caullet, Alain**
**23, rue des Morillons**
**F-75015 Paris(FR)**
Inventeur: **Marchand, Véronique**
**13, Parc du Château**
**F-78430 Louveciennes(FR)**
Inventeur: **Houard, Philippe**
**2, Parc du Château**
**F-78430 Louveciennes(FR)**

(74) Mandataire: **Lecca, Jean et al**
**CABINET PLASSERAUD 84, rue d'Amsterdam**
**F-75009 Paris(FR)**

(54) **Capteur de position et de déplacement, notamment de la position et du déplacement d'un doigt humain, en particulier pour réaliser un atténuateur.**

(57) Le capteur de position comprend : une bande conductrice (2) sur un substrat isolant (1); une bande résistive (4) sur un substrat isolant (3), au moins un de ces deux substrats étant souple et ces deux substrats étant disposés en regard l'un de l'autre avec (2) en face de (4) à faible distance; une paire de conducteurs (5, 6) avec des extrémités (5a, 6a) connectées aux extrémités de (4); et un troisième conducteur électrique (7) avec son extrémité (7a) connectée à (2).

FIG.1.

## CAPTEUR DE POSITION ET DE DEPLACEMENT, NOTAMMENT DE LA POSITION ET DU DEPLACEMENT D'UN DOIGT HUMAIN, EN PARTICULIER POUR REALISER UN ATTENUATEUR

La présente invention concerne généralement les capteurs de position et/ou de déplacement, en particulier de tels capteurs aptes à réaliser un atténuateur du type potentiométrique.

Elle concerne plus particulièrement un capteur de la position et/ou du déplacement d'un doigt humain.

La technique connaît des potentiomètres et des diviseurs de tension comportant une résistance électrique fixe et un curseur apte à se déplacer le long de cette résistance et entrant en contact avec une zone variable de cette résistance.

La présente invention a pour objet un capteur comportant une telle résistance, dans lequel le curseur est remplacé par un doigt humain, ou par un autre élément mobile, apte à appuyer, en une position déterminée de ladite résistance, une zone d'un élément conducteur sensiblement parallèle à la résistance, de manière à réaliser un contact électrique, au niveau de la zone de pression, entre ladite résistance et ledit élément conducteur.

L'invention a donc pour objet un capteur de position et de déplacement caractérisé en ce qu'il comprend : une bande conductrice établie sur une face d'un premier substrat isolant allongé; une bande résistive allongée établie sur une face d'un second substrat isolant allongé, au moins un des deux substrats étant souple et ces deux substrats étant disposés en regard l'un de l'autre de manière que la bande résistive se trouve en face de la bande conductrice, à une faible distance de celle-ci; une paire de conducteurs électriques ayant chacun une première extrémité connectée à une extrémité différente de la bande résistive; et un troisième conducteur électrique ayant une première extrémité connectée à la bande conductrice.

De préférence le substrat de la bande résistive est souple, tandis que le substrat de la bande conductrice est rigide.

En particulier on peut appliquer le capteur précité pour réaliser un atténuateur dans lequel la différence de potentiel réduite est prélevée entre la seconde extrémité du troisième conducteur relié à la bande conductrice et la seconde extrémité d'un des conducteurs relié à une extrémité de la bande résistive, par rapport à la différence de potentiel, la différence de potentiel totale étant appliquée entre les secondes extrémités des deux conducteurs reliés aux extrémités de la bande résistive.

On peut prévoir, dans un tel capteur, des moyens pour vérifier la qualité du contact local entre la bande résistive et la bande conductrice , du fait de la pression, au niveau de cette zone, d'un doigt ou d'un autre élément sur le substrat souple.

On peut prévoir par ailleurs, connectés aux secondes extrémités des trois conducteurs, un ensemble électronique contrôlé par le capteur, avec éventuellement des moyens pour vérifier le bon contact local entre la bande résistive et la bande conductrice.

L'invention pourra, de toute façon, être bien comprise à l'aide du complément de description qui suit, ainsi que des dessins ci-annexés, lesquels complément et dessins sont, bien entendu, donnés surtout à titre d'indication.

La figure 1 représente en perspective un capteur doté des perfectionnements selon l'invention.

La figure 2 est une coupe par II-II de la figure 1.

La figure 3 est une vue éclatée du capteur de la figure 1.

La figure 4 représente le capteur de la figure 1 en fonctionnement, un doigt assurant un contact entre une zone de la bande résistive avec la bande conductrice.

La figure 5 est une coupe par V-V de la figure 4.

La figure 6 illustre, schématiquement, l'analogie d'un capteur selon l'invention avec un potentiomètre classique, ainsi que l'électronique d'utilisation du capteur.

La figure 7 représente un mode d'utilisation du capteur selon l'invention avec une résistance talon.

La figure 8 montre la variation , en fonction du temps, de la tension de sortie d'un tel capteur en l'absence de contact et en cas de contact.

Les figures 9 et 10 illustrent deux modes de réalisation d'un montage destiné à vérifier l'existence d'un bon contact entre une zone de la bande résistive et la bande conductrice.

Les figures 11, 12 et 13 illustrent trois modes de réalisation de schémas électroniques d'utilisation du capteur des figures 1 à 3 doté d'une résistance talon.

La figure 14 illustre un autre mode de réalisation de l'ensemble électronique d'utilisation d'un tel capteur avec une résistance talon.

La figure 15, enfin, représente l'organigramme de la mise en oeuvre du montage de la figure 14.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser un capteur de position et de déplacement, on s'y prend comme suit ou d'une manière analogue.

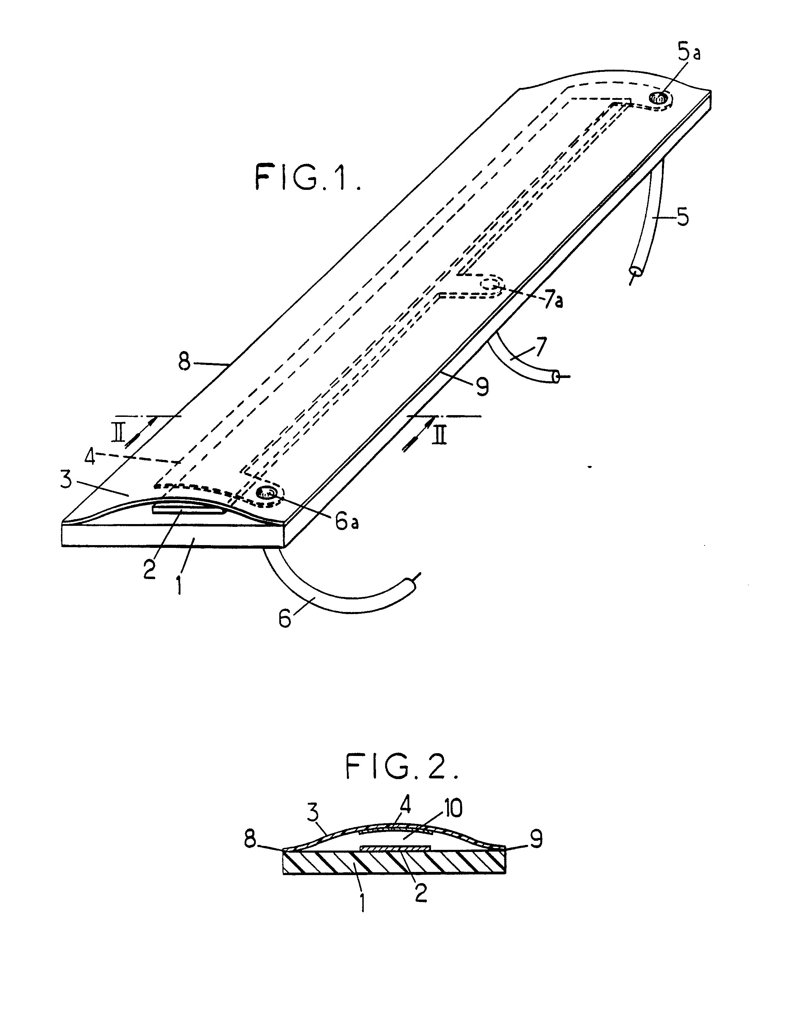

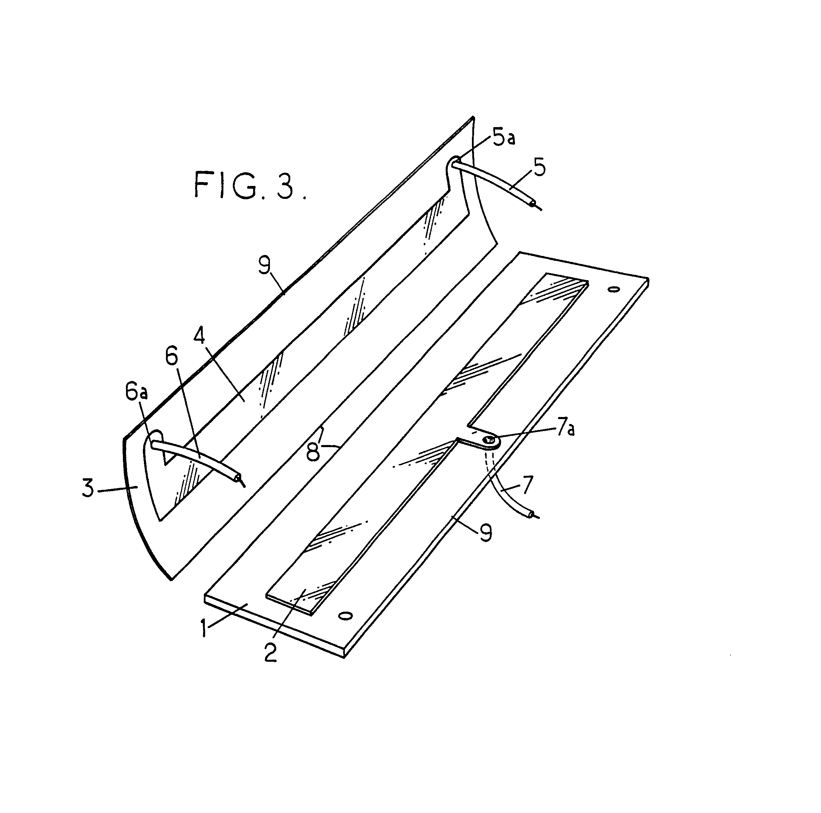

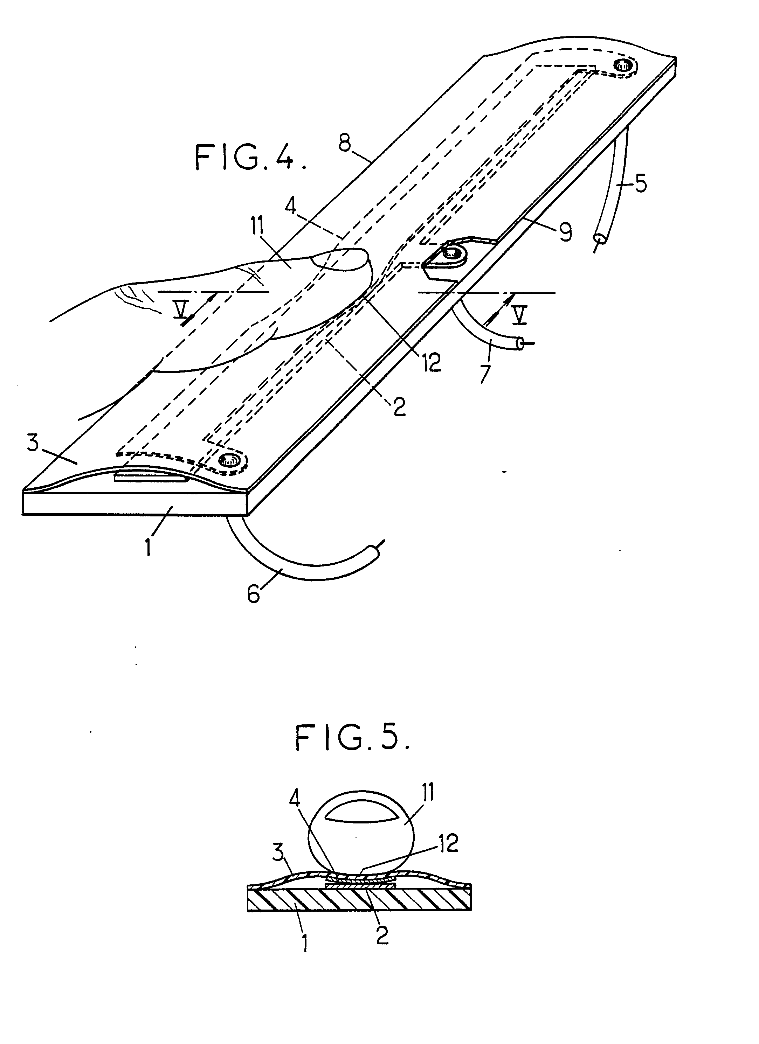

On se réfère tout d'abord aux figures 1 à 3 montrant la structure du capteur selon l'invention, ainsi qu'aux figures 4 et 5 illustrant ce capteur en fonctionnement.

Le capteur selon l'invention comporte :

-un premier substrat isolant allongé 1, appelé "collecteur", qui est rigide et qui est réalisé par exemple en résine époxy, sur lequel on a déposé une bande ou surface conductrice 2, par exemple en cuivre, revêtu d'un métal noble, tel que l'or, l'argent;

-un second substrat isolant allongé 3, appelé "piste", qui est souple et qui est réalisé par exemple en "kapton", sur lequel on a déposé une bande ou surface résistive 4, par exemple en une matière plastique conductrice ;

-une paire de conducteurs électriques 5, 6, dont les premières extrémités 5a, 6a sont connectées aux extrémités de la piste 4; et

-un troisième conducteur électrique 7, dont une première extrémité 7a est connectée au collecteur 2.

Le substrat souple 3 est concave en regard du substrat rigide 1, sa concavité étant provoquée par exemple par le dépôt de la matière plastique conductrice sur lui.

Les deux substrats 1 et 3 sont solidarisés le long de leurs bords latéraux 8 et 9, alors qu'ils sont écartés à distance dans leur zone médiane allongée, un espace 10 existant normalement (comme visible sur la figure 2 en particulier) entre le collecteur 2 et la piste 4.

En se référant maintenant plus particulièrement aux figures 4 et 5, on voit que lorsqu'on exerce une pression, par exemple au moyen d'un doigt humain 11, sur le substrat souple 3, en une zone déterminée 12 de celui-ci, la piste 4 vient au contact, dans cette zone 12, du collecteur 2, comme visible en particulier sur la figure 5. Au niveau de la zone 12 la piste 4 est en contact mécanique et électrique avec le collecteur 2.

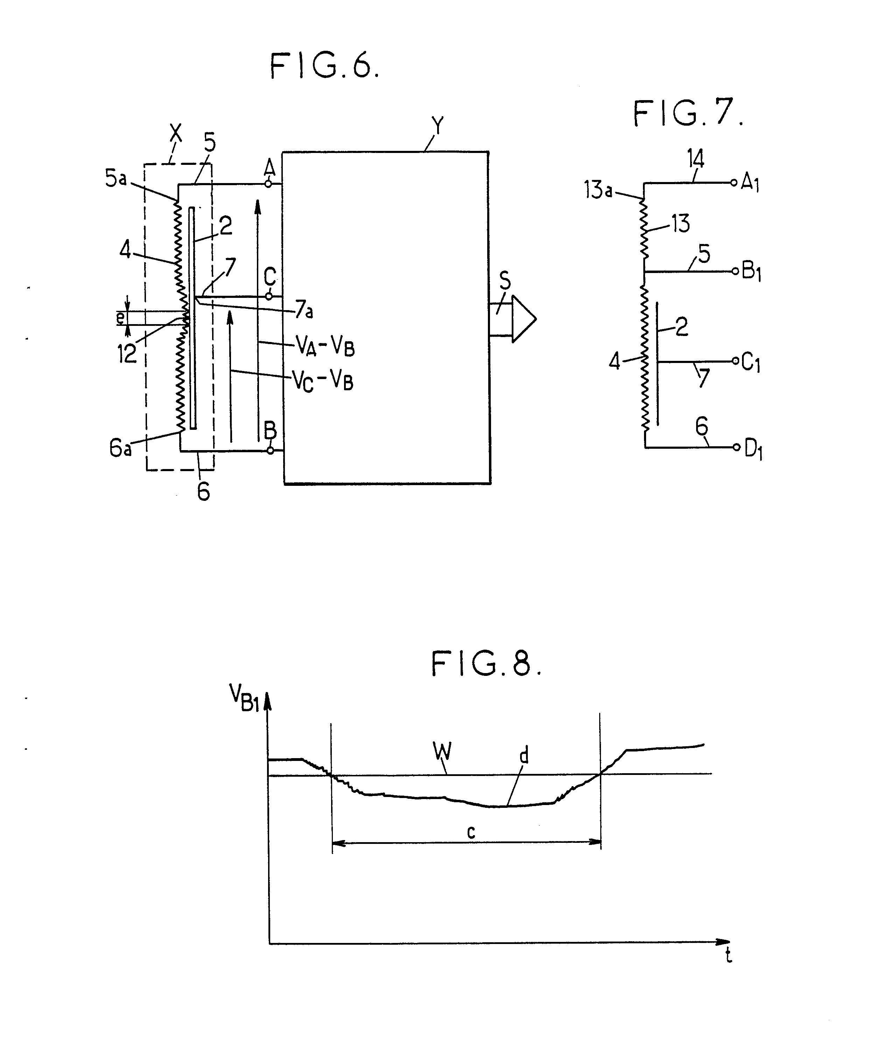

Comme on le voit sur la partie de gauche de la figure 6 (partie entourée par un rectangle X en traits interrompus), le dispositif des figures 1 à 3 permet de réaliser une fonction équivalente à celle d'un potentiomètre, la pression du doigt remplissant le rôle du curseur d'une potentiomètre classique. Dans le rectangle X on retrouve - schématiquement la piste résistive 4 et le collecteur conducteur 2, ainsi que les conducteurs électriques 5, 6 et 7 avec leurs premières extrémités respectives 5a, 6a et 7a.

Comme dans un potentiomètre classique, la piste résistive 4 peut être soit linéaire, soit fonctionnelle. Par ailleurs, elle peut comporter des prises intermédiaires, un point milieu et/ou au moins une résistance talon (comme cela sera d'ailleurs illustré ci-après) pour réaliser des fonctions annexes.

Avec un capteur selon l'invention on effectue généralement des mesures du type ratiométrique en déterminant le rapport

$$M = \frac{V_C - V_B}{V_A - V_B}$$

, en appelant $V_A$, $V_B$, $V_C$ les potentiels aux points A, B, C respectivement (voir figure 6), c'est-à-dire aux secondes extrémités des conducteurs 5, 6 et 7 respectivement.

Sur la figure 6 on a représenté - schématiquement par un bloc Y l'électronique de traitement comportant trois entrées connectées aux points A, B et C et une sortie numérique S.

Sur la figure 7 on a illustré la partie de la figure 6 comprise dans le rectangle X, mais en y ajoutant une résistance talon 13 connectée en série avec la piste résistive 4; l'extrémité 13a de la résistance talon 13 non connectée à la piste résistive 4 est connectée à la première extrémité d'un conducteur 14. Sur la figure 7 on a noté respectivement $A_1$, $B_1$, $C_1$ et $D_1$ les deuxièmes extrémités, non connectées aux éléments 4, 2 et 13, des conducteurs 14, 5, 7 et 6 respectivement.

Un des problèmes posés par le capteur selon l'invention est le contrôle du contact entre la piste 4 et le collecteur 2 dans la zone 12 - notamment la détection d'un bon contact entre ces deux éléments sous l'effet d'une pression exercée sur la piste 4, par exemple au moyen d'un doigt - afin d'éliminer les mesures non significatives lorsque la pression n'est pas franche.

Sur la figure 8 on a représenté une courbe d montrant la variation de la tension $V_{B1}$ (au point $B_1$ de la figure 7) en fonction du temps t, lorsqu'on alimente le montage de la figure 7 entre les points $A_1$ et $D_1$, avec une tension U, et lorsqu'on observe la tension $V_{B1}$ par rapport à $V_{D1}$. La droite horizontale W représente le seuil de bon contact, $V_{B1}$ étant inférieur au seuil W en cas de bon contact entre la piste 4 et le collecteur 2 (zone c), alors que $V_{B1}$ est supérieur au seuil W en cas d'absence de contact (en dehors de la zone c, c'est-à-dire à droite et à gauche de celle-ci). La courbe d montre donc ce qui se produit lorsqu'on appuie le doigt 11 sur la piste 4 dans la zone 12, avec passage du non contact au contact (dans la zone de bon contact c).

La variation de la tension $V_{B1}$ depend bien sûr de la pression exercée par le doigt, de la surface sur laquelle s'exerce la pression (donc de la zone e et de la piste 4 court-circuitée par le collecteur 4, zone e illustrée sur la figure 6) et également de la tension U et de la relation entre la valeur R de la résistance talon 13 et la résistance P de la piste 4.

La variation de $V_{B1}$ est donnée par la formule

$$\Delta V_{B1} = V \frac{e\,PR}{(R+P-eP)(R+P)}$$

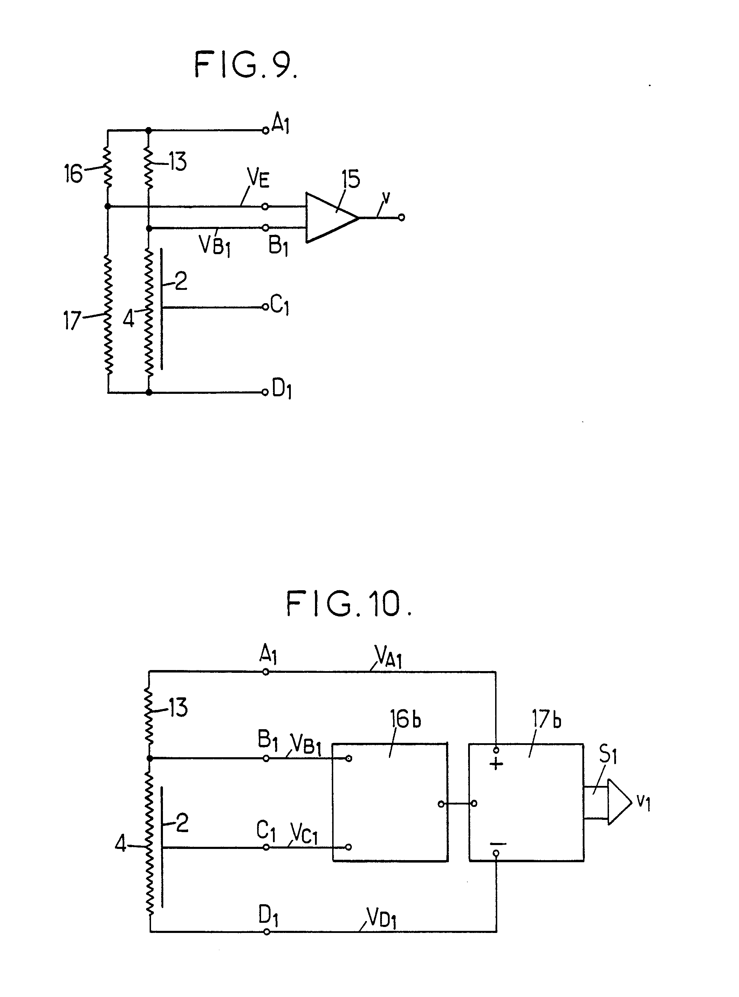

Sur les figures 9 et 10 on a illustré deux montages permettant de détecter un bon contact franc entre la piste 4 et le collecteur 2.

Sur la figure 9 on met en oeuvre un comparateur 15 pour détecter la variation de $V_{B1}$ par rapport à une tension de polarisation $V_E$ définie par un diviseur de tension à deux résistances 16 et 17 de valeurs respectives $R_1$ et $R_2$. Le comparateur 15 débitera un signal de sortie de validation v lorsque $V_{B1}$ est supérieur à $V_E$ qui correspond en fait à la tension de seuil W définie sur la figure 8 et qui est obtenue grâce au diviseur de tension 16, 17. L'absence du signal de validation v signifie que le contact entre la piste 4 et le collecteur 2 n'existe pas ou n'est pas franc et que la mesure doit être éliminée.

Dans le cas de la figure 10, on met en oeuvre, pour vérifier le bon contact entre la piste 4 et le collecteur 3, un multiplexeur analogique 16b et un convertisseur analogique/digital (ou analogique/numérique) 17b pour mesurer $V_{B1}$ -$V_{D1}$ et $V_{C1}$ -$V_{D1}$. Le multiplexeur 16b multiplexe les tensions $V_{B1}$ et $V_{C1}$, la sortie du multiplexeur 16b constituant l'entrée principale du convertisseur 17b qui reçoit les tensions $V_{A1}$ et $V_{D1}$ comme tensions de référence positive et négative respectivement. La sortie numérique est disponible en $S_1$ et elle est constituée, en cas de contact franc entre la piste 4 et le collecteur 2, par un signal de validation $v_1$.

Le capteur selon l'invention peut non seulement servir d'atténuateur, mais fournir différentes informations dans le cas où le doigt est remplacé par un élément mobile par rapport au capteur, par exemple la position, le déplacement et/ou la vitesse de cet élément mobile (ou éventuellement du doigt). On peut également réaliser des fonctions de commande avec le capteur selon l'invention.

Ce capteur peut fonctionner de différentes manières, à savoir de manière incrémentale, absolue, parallèle, série, synchrone, etc.

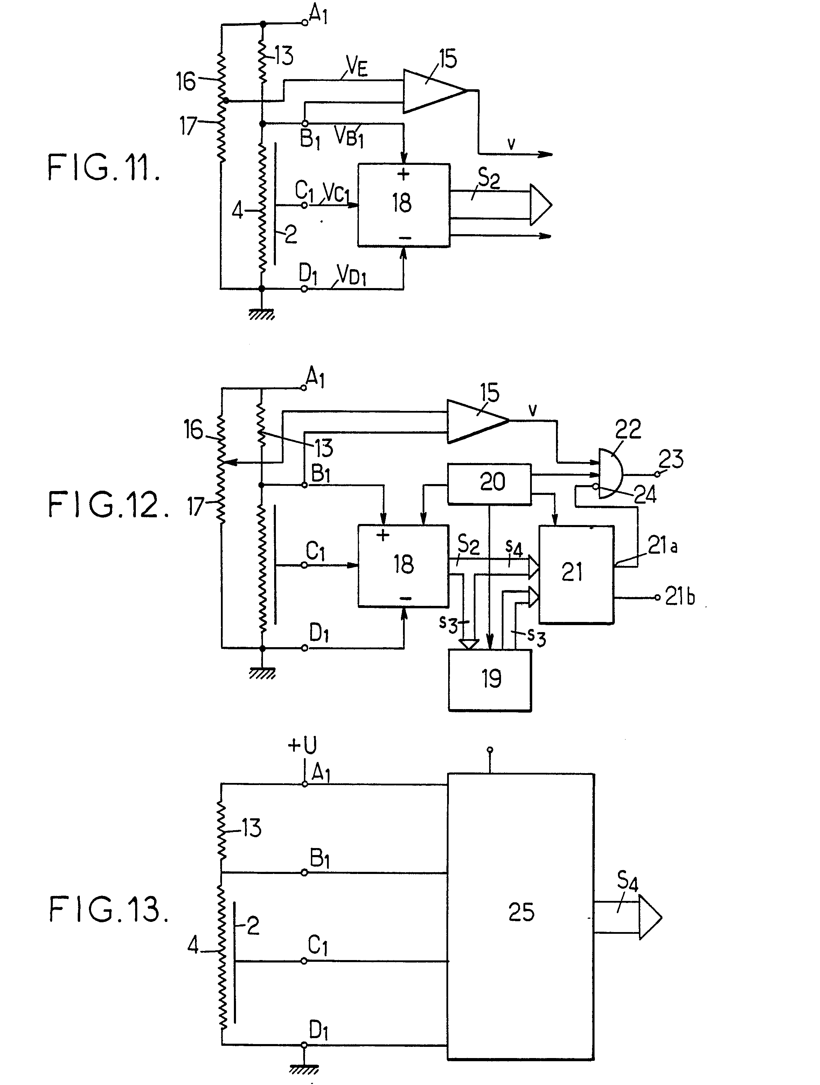

Sur les figures 11, 12 et 13 on a illustré trois modes de réalisation d'un traitement mettant en oeuvre le capteur selon l'invention tel que schématisé sur les figures 6 et 7 (sans ou avec résistance talon).

Sur la figure 11 on a repris le montage de la figure 9 avec un comparateur 15 pour débiter un signal de validation v, en cas de bon contact; l'unité de traitement proprement dite comprend un convertisseur analogique/digital 18 recevant $V_{C1}$ sur son entrée principale et $V_{B1}$ et $V_{D1}$ sur ses entrées de référence positive et négative respectivement. La sortie $S_2$ du convertisseur 18 représente directement la position du contact entre la piste 4 et le collecteur 2 lorsque la sortie du comparateur 15 débite le signal de validation V. La sortie $S_2$ est absolue dans ce montage.

La figure 12 reprend également la figure 9 avec un comparateur 15 débitant un signal de validation v, en cas de bon contact, et elle comporte également, comme la figure 11, un convertisseur analogique/digital 18 avec les mêmes entrées que le convertisseur 18 de la figure 11 pour la connexion à $B_1$, $C_1$ et $D_1$.

Le montage de la figure 12 se distingue de celui de la figure 11 du fait qu'il comporte un verrou ou mémoire 19 pour enregistrer la valeur numérique précédente $s_3$ débitée par le convertisseur 18 sur sa sortie $S_2$. Une unité de contrôle 20 contrôle le convertisseur 18, le verrou 19 et un comparateur 21 qui reçoit, d'une part, la valeur numérique précédente $s_3$ du verrou 19 et, d'autre part, la valeur numérique actuelle $s_4$ du convertisseur 18. Enfin une porte ET 22 ne débite sur sa sortie 23 que si elle reçoit le signal de validation v du comparateur 15, un signal de contrôle de l'unité 20 et un signal de non égalité à partir de la sortie d'égalité 21a du comparateur 21, et ceci à travers une porte NON 24 (en variante l'entrée de la porte ET 22 connectée à la sortie 21a peut être une entrée d'inhibition, ce qui évite d'utiliser une porte NON séparée).

Finalement sur la sortie 23 on a un signal d'horloge et sur la sortie 21b du comparateur 21 un signal indiquant le signe de la différence entre $s_4$ et $s_3$.

Chaque comparaison entre $s_4$ et $s_3$ commandée par l'unité de contrôle 20 fournira une information de sens sur la sortie 21a et éventuellement une impulsion sur la sortie 23, s'il y a bon contact et si les deux valeurs comparées $s_4$ et $s_3$ sont différentes. Il s'agit là d'une information relative, incrémentale, qui indique seulement un changement de position du doigt ou autre élément mobile, sans aucune référence d'origine absolue.

Quant à la figure 13, elle représente la mise en oeuvre d'un microprocesseur 25 connecté eux points $A_1$, $B_1$, $C_1$, $c_2$ d'un capteur selon l'invention à piste 2 et collecteur 4, avec une résistance talon 13, la tension + U étant appliquée entre le point $A_1$ et le point $D_1$, ce dernier connecté à la masse.

Le microprocesseur peut par exemple être du type $\mu$PD 7816 (ou $\mu$PD 7811), monocircuit à huit bits, avec convertisseur analogique/digital incorporé ayant une sortie numérique $S_4$.

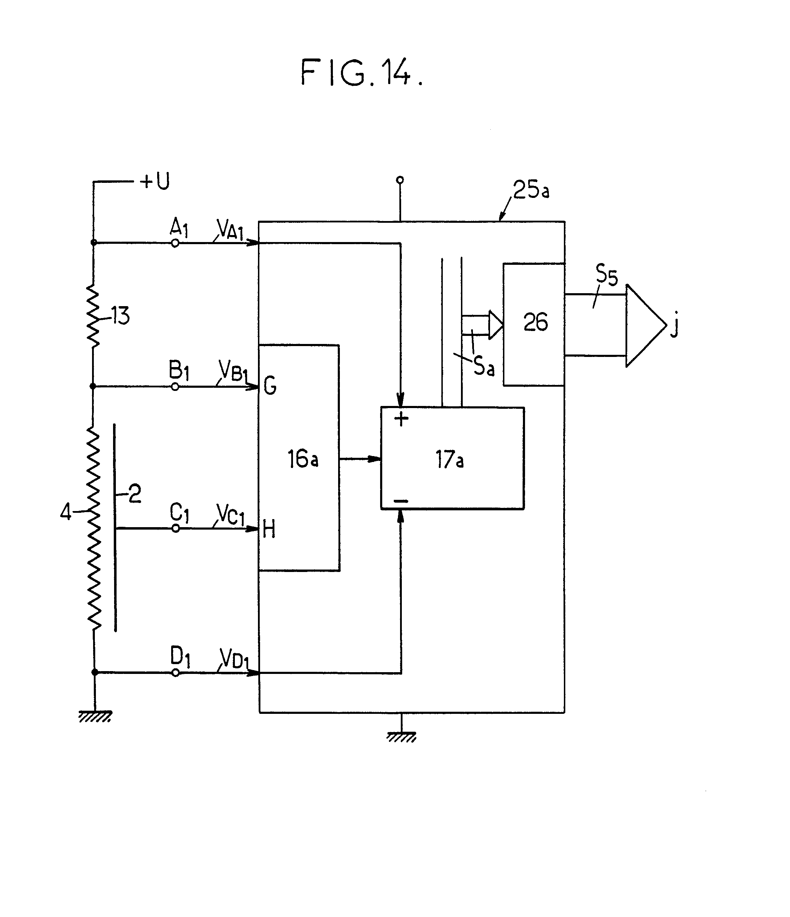

La figure 14 met en oeuvre, comme la figure 13, un microprocesseur 25a qui peut également être du type $\mu$PD 7811 ou $\mu$PD 7816. Ce microprocesseur comporte un multiplexeur 16a et un convertisseur analogique/digital 17a du même type que le multiplexeur 16b et le convertisseur 17b de la figure 10; les connexions des unités 16a et 17a sont analogues aux connexions des unités 16b et 17b de la figure 10. Le microprocesseur est prévu pour comporter également une unité de correction 26 connectée à la sortie numérique Sa du convertisseur 17a, la sortie numérique $S_5$ du microprocesseur 25a étant constituée par un signal numérique j.

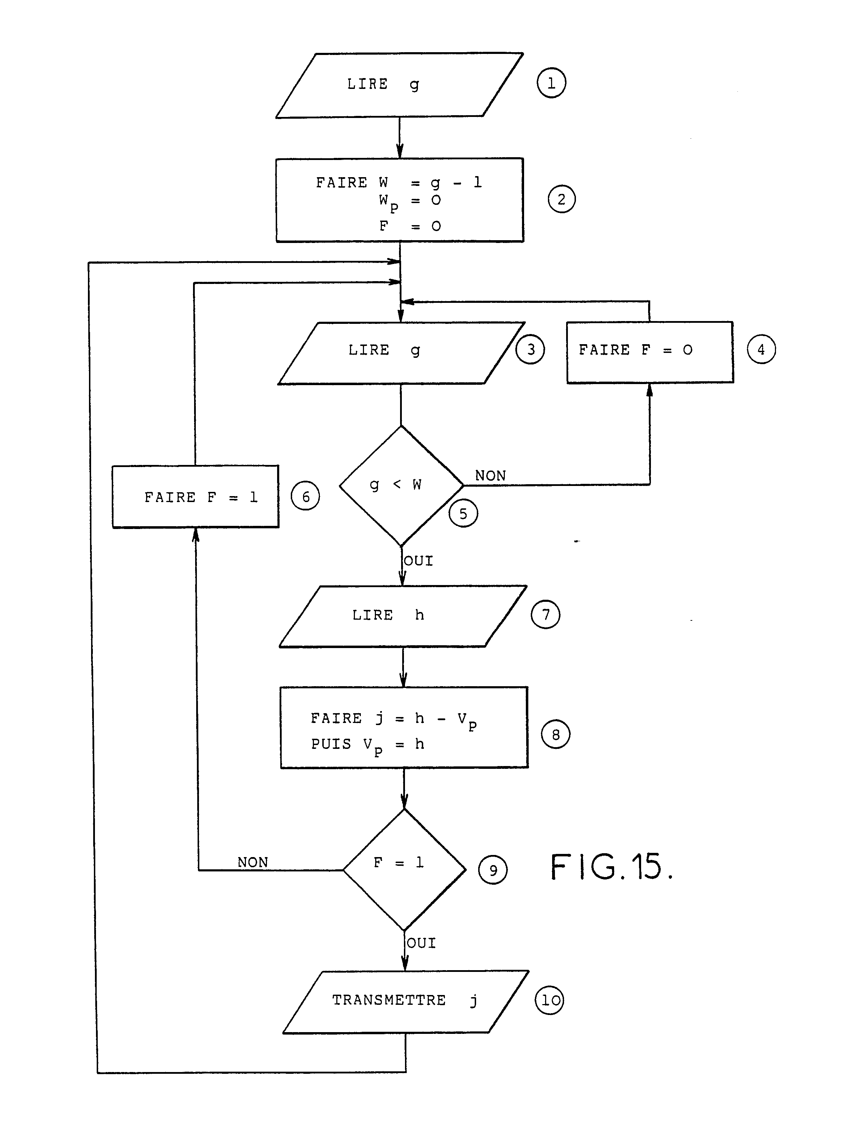

On va exposer maintenant, avec référence à la figure 15, le fonctionnement du microprocesseur 25a de la figure 14, en définissant préalablement les symboles utilisés dans l'organigramme représentatif du fonctionnement :

g : valeur numérique, fournie par le convertisseur 17a, de la tension présente, à l'instant de la mesure, sur l'entrée multiplexée G du multiplexeur 16a, à savoir $V_{B1}$ -$V_{D1}$

h : valeur numérique, fournie par le convertisseur 17a, de la tension présente, à l'instant de la mesure, sur l'entrée multiplexée H du multiplexeur 16a, à savoir $V_{C1}$ -$V_{D1}$

W : seuil (voir figure 8 et sa description) de décision d'un bon contact pour la valeur lue en G (pression suffisante d'un doigt ou d'un élément mobile)

$V_p$: valeur lue précédemment par le convertisseur 17a sur l'entrée multiplexée H du multiplexeur 16a, à savoir $V_{C1}$ -$V_{D1}$

F : indicateur permettant de mémoriser l'information "bon contact" (action volontaire du doigt, par exemple), matérialisée par F = 1

j : valeur numérique de correction, à savoir écart entre deux mesures successives de h (sur H) en présence de l'information "bon contact" (F = 1), donc valeur représentative du déplacement de la zone de pression du doigt ou de l'élément mobile actionnant le capteur.

Ces symboles étant définis, on peut se reporter maintenant à l'organigramme de la figure 15 dont les dix opérations peuvent être résumées comme suit :

Opération 1 : à la mise en route du système (mise sous tension), sans aucune action sur le capteur, lire la valeur de g

Opération 2 : calculer le seuil W pour avoir un bon fonctionnement du système et donc détecter un "bon contact" du collecteur sur la piste; pour cela on retranche une unité à la valeur g que l'on vient de lire W = g - 1; mettre les registres "VP" et "F" à zéro

Opération 3 : lire la valeur de g

Opération 4 : comparer la valeur g que l'on vient de lire à la valeur W calculée à la mise en route:

-si g est plus petit que W, cela veut dire qu'une portion suffisante de piste est court-circuitée et qu'il y a donc présence d'un doigt sur le capteur; on peut donc continuer le cycle ("bon contact")

Opération 5 : si g est supérieur ou égal à W, il n'y a pas à coup sûr un bon contact; on recommence le cycle en mettant à "0" l'indicateur F, puis en allant à l'opération 3

Opération 6 : si la condition est remplie, on actionne à "1" l'indicateur F

Opération 7 : lire la valeur de g

Opération 8 : calculer la correction (l'écart de position entre la mesure précédente et l'actuelle) j = g - $V_p$

-remplacer la valeur précédente $V_p$ par la nouvelle valeur g |$V_p$ = g

Opération 9 : tester l'indicateur F -si F = 1, transmettre la correction j -si F = 0, mettre l'indicateur F à 1, puis recommencer l'opération 3

Opération 10 : transmission de la valeur j du déplacement du contact sur la piste ("correction"), puis recommencer l'opération 3

On voit donc en définitive que le capteur selon l'invention illustré sur les figures 1 à 3, quoique d'une réalisation très simple et peu coûteuse, peut être utilisé dans des montages très différents permettant de constituer un atténuateur, et en particulier un atténuateur tactile, ou de réaliser des dispositifs pour déterminer la position, le déplacement et/ou la vitesse de déplacement d'un élément mobile par rapport au capteur, par exemple pour une application en robotique.

On peut bien entendu disposer en parallèle plusieurs capteurs selon les figures 1 à 3 pour réaliser des égaliseurs ou correcteurs haute fidélité ou d'autres dispositifs.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

## Revendications

1. Capteur de position et de déplacement, caractérisé en ce qu'il comprend en combinaison : une bande conductrice (2) établi sur une face d'un premier substrat isolant, rigide, allongé (1) ; une bande résistive, souple, allongée (4) établie sur une face d'un second substrat isolant allongé (3), ladite bande résistive étant constituée en une matière plastique conductrice et ces deux substrats étant disposés en regard l'un de l'autre de manière que la bande résistive se trouve en face de la bande conductrice, à une faible distance de celle-ci ; une paire de conducteurs (5, 6) ayant chacun une première extrémité (5a, 6a) connectée à une extrémité différente de la bande résistive ; et un troisième conducteur électrique (7) ayant une première extrémité (7a) connectée à la bande conductrice.

2. Capteur selon la revendication 1, caractérisé en ce que le substrat (1) portant la bande conductrice (2) est plan et en ce que le substrat (3) portant la bande résistive (4) présente une concavité tournée vers le substrat (1) portant la bande conductrice (2).

3. Capteur selon la revendication 1 ou 2, caractérisé en ce que le substrat (1) portant la bande conductrice (2) est réalisé en une résine époxy, tandis que le substrat (3) portant la bande résistive (4) est réalisé en "kapton"

4. Capteur selon l'une **quelconque** des revendication précédentes, caractérisé en ce qu' il comporte, connectée en série avec la bande résistante, (4), une résistance talon (13).

5. Montage potentiométrique, caractérisé en ce qu'il comporte un capteur selon l'une quelconque des revendications précédentes.

6. Montage selon la revendication 5, caractérisé en ce qu'il comprend des moyens pour vérifier le bon contact local entre la bande résistive (4) et la bande conductrice (2) en s'assurant que la tension de sortie $V_{B1}$ du capteur dépasse un certain seuil.

7. Montage selon la revendication 6, caractérisé en ce que lesdits moyens sont constitués par un comparateur (15) recevant, d'une part, la tension de sortie utile ($V_{B1}$) du capteur et, d'autre part, une tension de référence ($V_E$), notamment à partir d'un diviseur de ten sion (16, 17).

8. Montage selon la revendication 6, caractérisé en ce que lesdits moyens sont constitués par un multiplexeur (16b, 16a) recevant la tension de sortie utile du capteur et une tension auxiliaire ($V_{C1}$) du capteur, et un convertisseur analogique/digital (17b, 17a) recevant la sortie du multiplexeur.

9. Montage selon la revendication 5, caractérisé en ce qu'il comprend un comparateur (15) recevant, d'une part, la tension de sortie utile ($V_{B1}$) du capteur et, d'autre part, une tension de référence ($V_E$), notamment à partir d'un diviseur de tension (16, 17) et un convertisseur analogique/digital (18) recevant la tension de sortie utile ($V_{B1}$) du capteur, la sortie numérique du convertisseur n'étant transmise que lorsque le comparateur indique que la tension de sortie utile du capteur est supérieure à la tension de référence.

10. Montage selon la revendication 9, caractérisé en ce qu'il comprend en outre une unité à mémoire (19) apte à stocker la tension de sortie du convertisseur analogique/digital (18), et un comparateur (21) apte à comparer la tension de sortie actuelle ($s_4$) du comparateur avec la sortie ($s_3$) préalablement stockée dans la mémoire.

11. Dispositif caractérisé en ce qu'il comprend en combinaison un capteur selon l'une quelconque des revendications 1 à 4, et un microprocesseur (25, 25a) connecté à la sortie utile ($B_1$) de ce capteur et aux autres sorties ($A_1$, $C_1$, $D_1$) de celui-ci.

12. Montage égaliseur ou correcteur, caractérisé en ce qu'il comporte en parallèle plusieurs capteurs selon l'une quelconque des revendications 1 à 4.

FIG.1.

5a

5

7a

7

8

9

4

3

2

1

6a

6

FIG.2.

3

4

10

8

9

1

2

FIG. 3.

0 260 365

FIG.4.

FIG.5.

# FIG.6.

# FIG.7.

# FIG.8.

# FIG.9.

# FIG.10.

**FIG.11.**

**FIG.12.**

**FIG.13.**

FIG.14.

FIG.15.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 517 769 (LAMPEN)<br>* Page 6, dernier alinéa - page 7, premier alinéa; page 12; page 13, premier alinéa; revendications 1-6; figures 1-5; page 21, dernier alinéa - page 21, premier alinéa * | 1 | H 01 C 10/10 |
| A | | 5-7 | |
| A | US-A-4 270 171 (MAPLES et al.)<br><br>* Revendications 1-3,13,16,21-22,24; figures 1-5; colonne 3, lignes 23-30 * | 1,5-7,<br>9,12 | |
| A | ELECTRONIC DESIGN, vol. 19, 16 septembre 1982, pages 71-82, Waseca, MN, Denville, New Jersey, US; F. GOODENOUGH: "Analog 1/0 boards unburden host muP, system designer, and ultimate user"<br>* Page 72, figure 1; page 74, figure 3; page 75, figures * | 8-11 | **DOMAINES TECHNIQUES RECHERCHES (Int. Cl.4)**<br><br>H 01 C<br>G 01 D<br>G 06 K |
| A | US-A-4 494 105 (V. DEAN HOUSE)<br>* Figures 1-6,9; revendications 1,5-7,21; résumé * | 1,12 | |
| | --- -/- | | |

Le présent rapport de recherche a été établi pour toutes les revendications

| Lieu de la recherche<br>LA HAYE | Date d'achèvement de la recherche<br>27-04-1987 | Examinateur<br>HOORNAERT W. |
|---|---|---|

Office européen
des brevets

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl 4) |
|---|---|---|---|
| A | GB-A-1 554 094 (STANDARD TELEPHONES) | | |

-----

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 27-04-1987 | HOORNAERT W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82